# EUROPÄISCHE PATENTANMELDUNG

(11) **EP 3 556 589 A1**
(43) Veröffentlichungstag der Anmeldung: **23.10.2019**
(21) Anmeldenummer: 18167796.4
(22) Anmeldetag: 17.04.2018
(51) Int. Cl.: B60J 5/06, B60J 7/10

(54) **RAHMEN, PLANENVERSCHLUSSELEMENT, FAHRZEUGAUFBAU UND NUTZFAHRZEUG**

(71) Anmelder: Schmitz Cargobull Gotha GmbH, 99867 Gotha (DE)
(72) Erfinder: Ehrhardt, Jörg, 99958 Burgtonna (DE)
(74) Vertreter: Liedtke & Partner Patentanwälte

(57) **Zusammenfassung**

Die Erfindung betrifft einen Rahmen (4) für einen Fahrzeugaufbau (2) mit einem äußeren Rahmenabschnitt (4.1), umfassend ein oberes Ende (4.1.1) und ein unteres Ende (4.1.2), eine an dem unteren Ende (4.1.2) des Rahmenabschnitts (4.1) ausgebildeten Befestigungsstruktur (7), welche zum Einhaken zumindest eines Befestigungselements eines Planenverschlusselements (5) für eine Plane (3) des Fahrzeugaufbaus (2) eingerichtet ist, zumindest einem in Längsausdehnung zwischen einem vorderen Ende (4.1.3) und einem hinteren Ende (4.1.4) des Rahmenabschnitts (4.1) angeordneten Ausschnitt (8), in welchem ein Teilbereich des unteren Endes (4.1.2), ein Teilbereich zwischen dem unteren Ende (4.1.2) und dem oberen Ende (4.1.1) und ein Teilbereich der Befestigungsstruktur (7) ausgeschnitten sind, und einer in zumindest zwei Positionen anordbaren Befestigungsbrücke (10), welche in einer ersten Position den ausgeschnittenen Teilbereich des unteren Endes (4.1.2) des Rahmenabschnitts (4.1) überbrückt und zum Einhaken des zumindest einen Befestigungselements des Planenverschlusselements (5) eingerichtet ist und in einer zweiten Position den Ausschnitt (8) freigibt.

Die Erfindung betrifft weiterhin ein Planenverschlusselement (5) für eine Plane (3) eines Fahrzeugaufbaus (2), einen Fahrzeugaufbau (2) und ein Nutzfahrzeug (1).

## Beschreibung

Die Erfindung betrifft einen Rahmen für einen Fahrzeugaufbau.

Die Erfindung betrifft weiterhin ein Planenverschlusselement für eine Plane eines Fahrzeugaufbaus.

Ferner betrifft die Erfindung einen Fahrzeugaufbau und ein Nutzfahrzeug.

Aus dem Stand der Technik sind allgemein Fahrzeugaufbauten für Nutzfahrzeuge bekannt, welche an zumindest einer Seite eine Plane, beispielsweise eine so genannte Gardinenplane, auch als Seitenvorhang bezeichnet, oder eine so genannte Spannplane aufweisen. Unter Nutzfahrzeugen werden dabei insbesondere Lastkraftwagen, Anhänger und Auflieger verstanden.

Eine solche Plane ist aus einem mechanisch flexiblen Material gebildet und mit einem oberen Ende an einem oberen Rahmenabschnitt des Fahrzeugaufbaus verschiebbar oder fest angeordnet. Ein Fahrzeugaufbau mit einer verschiebbaren Anordnung der Plane wird auch als Tautliner (englisch Curtainsider) oder Schiebeplanenaufbau bezeichnet. Um eine sichere und straffe Befestigung der Plane an einem Rahmen des Fahrzeugaufbaus zu realisieren, ist die Plane an einem unteren Ende mittels einer Mehrzahl von Planenverschlusselementen an einem unteren Rahmenabschnitt des Fahrzeugaufbaus befestigt, wobei die Planenverschlusselemente als so genannte Spannschnallen ausgebildet sind.

Einen solchen Fahrzeugaufbau mit einer Seitenwandplane und mehreren Planenverschlüssen beschreibt die DE 87 09 691 U1, wobei die Planenverschlüsse jeweils mehrere Riemenstücke umfassen, die über Haken und Ösen zu verbinden und mit einer Schnalle zu straffen sind. Die Schnalle ist an einem Chassis des Fahrzeugaufbaus über ein Riemenstück befestigt.

Weiterhin zeigt die FR 2 861 027 A1 einen Fahrzeugaufbau mit einer Seitenwandplane und mehreren Planenverschlusselementen, wobei jedes Planenverschlusselement einen oberen Riemen umfasst, welcher an einem Spannelement befestigt und mit der Seitenwandplane vernäht ist. Weiterhin umfasst jedes Planenverschlusselement einen unteren Riemen, an dessen freiem Ende ein Befestigungshaken zum Verbinden mit einem unteren Rahmenabschnitt des Fahrzeugaufbaus befestigt ist. An einer dem Befestigungshaken abgewandten Seite ist der untere Riemen mit dem Spannelement verbunden und mittels desselben spannbar.

Der Erfindung liegt die Aufgabe zu Grunde, einen gegenüber dem Stand der Technik verbesserten Rahmen für einen Fahrzeugaufbau, ein verbessertes Planenverschlusselement für eine Plane eines Fahrzeugaufbaus, einen verbesserten Fahrzeugaufbau und ein verbessertes Nutzfahrzeug anzugeben.

Hinsichtlich des Rahmens wird die Aufgabe erfindungsgemäß durch die im Anspruch 1 angegebenen Merkmale, hinsichtlich des Planenverschlusselements durch die im Anspruch 9 angegebenen Merkmale, hinsichtlich des Fahrzeugaufbaus durch die im Anspruch 10 oder 11 angegebenen Merkmale und hinsichtlich des Nutzfahrzeugs durch die in Anspruch 14 oder 15 angegebenen Merkmale gelöst.

Vorteilhafte Ausgestaltungen der Erfindung sind Gegenstand der Unteransprüche.

Der erfindungsgemäße Rahmen für einen Fahrzeugaufbau umfasst einen äußeren Rahmenabschnitt, umfassend ein oberes Ende und ein unteres Ende und eine an dem unteren Ende des Rahmenabschnitts ausgebildete Befestigungsstruktur, welche zum Einhaken zumindest eines Befestigungselements eines Planenverschlusselements für eine Plane des Fahrzeugaufbaus eingerichtet ist. Weiterhin umfasst der Rahmen zumindest einen in Längsausdehnung zwischen einem vorderen Ende und einem hinteren Ende des Rahmenabschnitts angeordneten Ausschnitt, in welchem ein Teilbereich des unteren Endes, ein Teilbereich zwischen dem unteren Ende und dem oberen Ende und ein Teilbereich der Befestigungsstruktur ausgeschnitten sind. Zusätzlich ist eine in zumindest zwei Positionen anordbare Befestigungsbrücke vorgesehen, welche in einer ersten Position den ausgeschnittenen Teilbereich des unteren Endes des Rahmenabschnitts überbrückt und zum Einhaken des zumindest einen Befestigungselements des Planenverschlusselements eingerichtet ist und in einer zweiten Position den Ausschnitt freigibt.

Mittels des Rahmens ist in vorteilhafter Weise eine besonders niedrige Anordnung desselben auf einem Fahrgestell eines Nutzfahrzeugs möglich, um eine möglichst große Höhe des Fahrzeugaufbaus und daraus folgend ein großes Ladevolumen zu realisieren. Gleichzeitig ermöglicht der Ausschnitt des Rahmenabschnitts, welcher bei montiertem Rahmen insbesondere im Bereich einer Einfüllöffnung für einen Betriebsstoff angeordnet ist und dessen obere Begrenzung in einer größeren Höhe als die Einfüllöffnung angeordnet ist, dass die Einfüllöffnung mit einer entsprechenden Einfülleinrichtung, beispielsweise einer so genannten Zapfpistole, zugänglich ist.

Die Befestigungsbrücke ermöglicht in diesem Bereich der Aussparung das Einhaken des zumindest einen Befestigungselements des Planenverschlusselements. Hieraus ergibt sich in besonders vorteilhafter Weise, dass für unterschiedliche Nutzfahrzeuge mit unterschiedlichen Positionen einer Einfüllöffnung, beispielsweise unterschiedlichen Positionen eines Kraftstofftanks mit einer Einfüllöffnung, nicht verschiedene Planen mit verschieden positionierten Planenverschlusselementen erforderlich sind. Hierdurch können eine Variantenvielfalt und somit Herstellungskosten signifikant verringert werden.

Des Weiteren wird mittels der Befestigungsbrücke und der mit dieser möglichen Befestigung eines Planenverschlusselements im Bereich des Ausschnitts sichergestellt, dass erforderliche Abstände zwischen benachbarten Planenverschlusselementen eingehalten und insbesondere nicht überschritten werden. Somit kann eine zuverlässige Befestigung und Spannung einer Plane an dem Rahmen sichergestellt werden.

In einer möglichen Ausgestaltung des Rahmens ist die Befestigungsbrücke mittels zumindest eines Schwenkarms an dem Rahmenabschnitt befestigt, wobei der Schwenkarm um eine in Längsrichtung des Rahmenabschnitts verlaufende Schwenkachse schwenkbar ist. Diese schwenkbare Anordnung ermöglicht eine besonders einfache Überführung der Befestigungsbrücke von der ersten in die zweite Position und eine verliersichere Anordnung derselben am Rahmenabschnitt.

In einer weiteren möglichen Ausgestaltung des Rahmens ist eine Schwenkbewegung des Schwenkarms ausgehend von einer Außenseite des Rahmenabschnitts von der ersten Position der Befestigungsbrücke in Richtung einer Innenseite des Rahmenabschnitts freigegeben. Dies ermöglicht, dass die Befestigungsbrücke in einfacher Weise vor der Einführung der Einfülleinrichtung in die Einfüllöffnung oder während dieser Einführung mit der Einfüllöffnung von der ersten in die zweite Position verschwenkt werden kann.

In einer möglichen Weiterbildung des Rahmens stützt sich die Befestigungsbrücke in der ersten Position zumindest an einer Innenseite des Rahmenabschnitts ab. Hierbei bildet die Innenseite des Rahmenabschnitts ein Stützelement oder Lager, welches ein Verschwenken der Befestigungsbrücke ausgehend von der ersten Position zu der Außenseite des Rahmenabschnitts verhindert und somit eine Befestigung und ein Verspannen des Planenverschlusselements sicherstellt.

Gemäß einer möglichen Ausgestaltung des Rahmens stehen bzw. steht der Schwenkarm und/oder die Befestigungsbrücke in mechanischem Eingriff mit zumindest einem Federelement, dessen Federkraft in Richtung einer Innenseite des Rahmenabschnitts wirkt. Das Federelement ermöglicht eine Sicherstellung einer selbsttätigen Rückbewegung der Befestigungsbrücke von der zweiten in die erste Position.

Gemäß einer weiteren möglichen Ausgestaltung des Rahmens ist die Befestigungsbrücke von der ersten Position in Längsrichtung des Rahmenabschnitts in die zweite Position verschiebbar. Eine solche Verschiebung ermöglicht eine besonders einfache und zuverlässige Überführung der Befestigungsbrücke von der ersten in die zweite Position und umgekehrt.

Beispielsweise ist die Befestigungsbrücke zu einer solchen Verschiebung in einer entsprechenden Lagerung angeordnet, welche die Verschiebung für einen Nutzer in besonders einfacher Weise ermöglicht.

Gemäß einer möglichen Weiterbildung des Rahmens ist die Befestigungsbrücke in der ersten Position an dem Rahmenabschnitt mittels einer zerstörungsfrei lösbaren Verbindung, beispielsweise einer Verschraubung und/oder Verklipsung, kraft- und/oder formschlüssig befestigt. Diese Weiterbildung führt zu einer besonders großen Zuverlässigkeit der Fixierung der Befestigungsbrücke in der ersten Position.

Eine mögliche Ausgestaltung des Rahmens sieht vor, dass in einem den Ausschnitt umgebenden Bereich des Rahmenabschnitts eine Materialverstärkung angeordnet ist. Diese Materialverstärkung ermöglicht die Anordnung des Ausschnitts im Rahmenabschnitt unter Aufrechterhaltung einer erforderlichen mechanischen Stabilität des Rahmenabschnitts.

Das erfindungsgemäße Planenverschlusselement für eine Plane eines Fahrzeugaufbaus umfasst ein erstes Halteelement, welches an einem ersten Abschnitt zu einer Befestigung an der Plane eingerichtet ist, ein Spannelement, welches mit dem Halteelement verbunden ist, ein zweites Halteelement, welches mit dem Spannelement spannbar gekoppelt ist und ein Befestigungselement, welches an einem dem Spannelement abgewandten Abschnitt des zweiten Halteelements befestigt und zu einer Befestigung an einem Rahmenabschnitt des Fahrzeugaufbaus eingerichtet ist. Dabei umfasst das Befestigungselement eine Befestigungsbrücke, welche eingerichtet ist, einen in Längsausdehnung zwischen einem vorderen Ende und einem hinteren Ende des Rahmenabschnitts angeordneten Ausschnitt, in welchem ein Teilbereich des unteren Endes, ein Teilbereich zwischen dem unteren Ende und dem oberen Ende und ein Teilbereich der Befestigungsstruktur ausgeschnitten sind, in einem montierten Zustand zu überbrücken.

Die Befestigungsbrücke ermöglicht im Bereich der Aussparung das Einhaken des Befestigungselements des Planenverschlusselements. Hieraus ergibt sich in besonders vorteilhafter Weise, dass für unterschiedliche Nutzfahrzeuge mit unterschiedlichen Positionen einer Einfüllöffnung, beispielsweise unterschiedlichen Positionen eines Kraftstofftanks mit einer Einfüllöffnung, nicht verschiedene Planen mit verschieden positionierten Planenverschlusselementen erforderlich sind. Hierdurch können eine Variantenvielfalt und somit Herstellungskosten signifikant verringert werden.

Des Weiteren wird mittels der Befestigungsbrücke und der mit dieser möglichen Befestigung des Planenverschlusselements im Bereich des Ausschnitts sichergestellt, dass erforderliche Abstände zwischen benachbarten Planenverschlusselementen eingehalten und insbesondere nicht überschritten werden. Somit kann eine zuverlässige Befestigung und Spannung einer Plane an dem Rahmen sichergestellt werden.

Auch bei der Verwendung eines solchen Planenverschlusselements kann eine besonders niedrige Anordnung des Rahmens auf einem Fahrgestell eines Nutzfahrzeugs erfolgen, um eine möglichst große Höhe des Fahrzeugaufbaus und daraus folgend ein großes Ladevolumen zu realisieren. Gleichzeitig ermöglicht der Ausschnitt des Rahmenabschnitts, dass die Einfüllöffnung mit einer entsprechenden Einfülleinrichtung zugänglich ist.

Gemäß einer möglichen Weiterbildung ist die Befestigungsbrücke nachträglich an einem beliebigen Planenverschlusselement befestigbar, so dass eine Plane mit mehreren Planenverschlusselementen in einfacher Weise in Abhängigkeit einer Position der Aussparung anpassbar ist.

Der erfindungsgemäße Fahrzeugaufbau für ein Nutzfahrzeug umfasst in einer ersten möglichen Ausgestaltung zumindest einen oben genannten Rahmen und zumindest eine Plane mit zumindest einem Planenverschlusselement, welches ein zum Einhaken in die an dem unteren Ende des Rahmenabschnitts ausgebildete Befestigungsstruktur und in die Befestigungsbrücke eingerichtetes Befestigungselement umfasst. Die erste mögliche Ausgestaltung des Fahrzeugaufbaus zeichnet sich dabei durch die bereits genannten Vorteile der niedrigen Anordnung des Rahmens und daraus folgend des großen Ladevolumens, der einfachen Zugänglichkeit der Einfüllöffnung, der Nutzung eines Planentyps für verschiedene Anordnungen von Einfüllöffnungen und der besonders sicheren Befestigung und Spannung der Plane aus.

In einer zweiten möglichen Ausgestaltung umfasst der erfindungsgemäße Fahrzeugaufbau für ein Nutzfahrzeug zumindest einen Rahmen mit einem äußeren Rahmenabschnitt, umfassend ein oberes Ende und ein unteres Ende, eine an dem unteren Ende des Rahmenabschnitts ausgebildete Befestigungsstruktur, welche zum Einhaken zumindest eines Befestigungselements eines Planenverschlusselements für eine Plane eingerichtet ist, und zumindest einen in Längsausdehnung zwischen einem vorderen Ende und einem hinteren Ende des Rahmenabschnitts angeordneten Ausschnitt, in welchem ein Teilbereich des unteren Endes, ein Teilbereich zwischen dem unteren Ende und dem oberen Ende und ein Teilbereich der Befestigungsstruktur ausgeschnitten sind. Zusätzlich umfasst der Fahrzeugaufbau in dieser Ausgestaltung zumindest ein oben genanntes Planenverschlusselement. Auch die zweite mögliche Ausgestaltung des Fahrzeugaufbaus zeichnet sich dabei durch die bereits genannten Vorteile der niedrigen Anordnung des Rahmens und daraus folgend des großen Ladevolumens, der einfachen Zugänglichkeit der Einfüllöffnung, der Nutzung eines Planentyps für verschiedene Anordnungen von Einfüllöffnungen und der besonders sicheren Befestigung und Spannung der Plane aus.

Eine mögliche Weiterbildung der ersten und/oder zweiten Ausgestaltung des Fahrzeugaufbaus umfasst eine Stirnwand, eine Rückwand, zwei Seitenwände, einen Boden und ein sich zwischen der Stirnwand, der Rückwand und den Seitenwänden erstreckendes Dach, wobei zumindest eine der Seitenwände zumindest eine Plane umfasst, wobei die Plane in einem zumindest teilweise geschlossenen Zustand mit einem oberen Planenabschnitt an dem Dach und einem dem oberen Planenabschnitt gegenüberliegenden unteren Planenabschnitt mittels des zumindest einen Planenverschlusselements gespannt an einem Rahmenabschnitt des Rahmens befestigt ist. Die mechanisch flexible Plane kann aufgrund der Befestigungsbrücke an allen Position der Planenverschlusselemente sicher befestigt werden, wobei an jeder Position in einfacher Weise eine Spannung der Plane sichergestellt ist und somit Bewegungen, insbesondere ein Flattern, derselben während einer Bewegung des Fahrzeugaufbaus und daraus folgend erhöhte Strömungswiderstände und Geräuschentwicklungen minimiert werden.

In einer ersten möglichen Ausgestaltung umfasst das erfindungsgemäße Nutzfahrzeug einen oben genannten Rahmen und zumindest eine Einfüllöffnung für einen Betriebsstoff, wobei der zumindest eine Ausschnitt des Rahmenabschnitts im Bereich der Einfüllöffnung angeordnet ist und eine obere Begrenzung des Ausschnitts in einer größeren Höhe als die Einfüllöffnung angeordnet ist. Die erste mögliche Ausgestaltung des Nutzfahrzeugs zeichnet sich dabei durch die bereits genannten Vorteile der niedrigen Anordnung des Rahmens und daraus folgend des großen Ladevolumens, der einfachen Zugänglichkeit der Einfüllöffnung, der Nutzung eines Planentyps für verschiedene Anordnungen von Einfüllöffnungen, der besonders sicheren und einfachen Befestigung und Spannung der Plane sowie aufgrund der verringerten Variantenvielfalt an Planen durch geringere Herstellungskosten aus.

In einer zweiten möglichen Ausgestaltung umfasst das erfindungsgemäße Nutzfahrzeug einen Fahrzeugaufbau gemäß der zweiten möglichen Ausgestaltung oder einer Weiterbildung desselben sowie zumindest eine Einfüllöffnung für einen Betriebsstoff. Dabei ist der zumindest eine Ausschnitt des Rahmenabschnitts im Bereich der Einfüllöffnung angeordnet und eine obere Begrenzung des Ausschnitts ist in einer größeren Höhe als die Einfüllöffnung angeordnet. Auch die zweite mögliche Ausgestaltung des Nutzfahrzeugs zeichnet sich dabei durch die bereits genannten Vorteile der niedrigen Anordnung des Rahmens und daraus folgend des großen Ladevolumens, der einfachen Zugänglichkeit der Einfüllöffnung, der Nutzung eines Planentyps für verschiedene Anordnungen von Einfüllöffnungen, der besonders sicheren und einfachen Befestigung und Spannung der Plane sowie aufgrund der verringerten Variantenvielfalt an Planen durch geringere Herstellungskosten aus.

Ausführungsbeispiele der Erfindung werden im Folgenden anhand von Zeichnungen näher erläutert.

Darin zeigen:
- Figur 1: schematisch eine Seitenansicht eines Nutzfahrzeugs,
- Figur 2: schematisch einen vergrößerten Ausschnitt der Seitenansicht gemäß Figur 1 im Bereich eines Kraftstofftanks,
- Figur 3: schematisch einen weiter vergrößerten Ausschnitt der Seitenansicht gemäß Figur 1 im Bereich einer Einfüllöffnung des Kraftstofftanks,
- Figur 4: schematisch den Ausschnitt gemäß Figur 3 mit einer teiltransparenten Ansicht eines Rahmenabschnitts,
- Figur 5: schematisch eine perspektivische Ansicht des Ausschnitts des Rahmenabschnitts gemäß Figur 4,
- Figur 6: schematisch eine weitere perspektivische Ansicht des Ausschnitts des Rahmenabschnitts gemäß Figur 4
- Figur 7: schematisch eine Draufsicht auf ein Befestigungselement eines Planenverschlusselements.

Einander entsprechende Teile sind in allen Figuren mit den gleichen Bezugszeichen versehen.

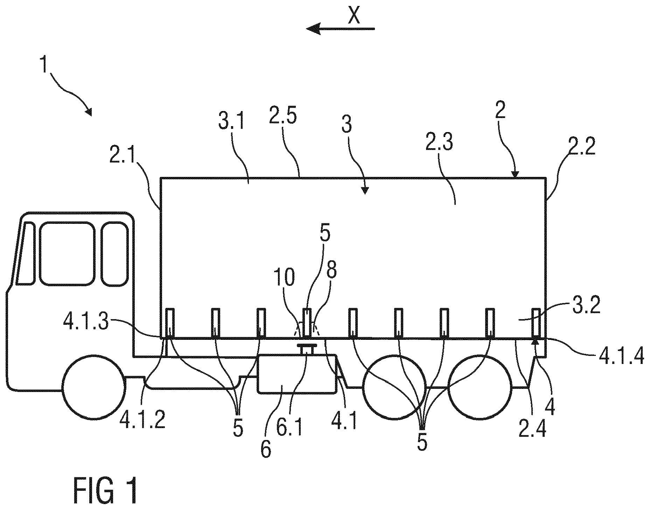

In **Figur 1** ist eine Seitenansicht eines möglichen Ausführungsbeispiels eines Nutzfahrzeugs 1 dargestellt.

Das Nutzfahrzeug 1 umfasst einen Fahrzeugaufbau 2, welcher als so genannter Tautliner (englisch Curtainsider) oder Schiebeplanenaufbau ausgebildet ist. Der Fahrzeugaufbau 2 umfasst eine Stirnwand 2.1, eine Rückwand 2.2, zwei Seitenwände 2.3, wobei nur eine Seitenwand 2.3 dargestellt ist, einen Boden 2.4 und ein sich zwischen der Stirnwand 2.1, der Rückwand 2.2 und den Seitenwänden 2.3 erstreckendes Dach 2.5.

Zumindest eine der Seitenwände 2.3 umfasst eine mechanisch flexible Plane 3, welche im dargestellten geschlossenen Zustand mit einem oberen Planenabschnitt 3.1 an dem Dach 2.5 befestigt ist. Dabei ist der obere Planenabschnitt 3.1 in Querrichtung der Plane 3 verschiebbar am Dach 2.5 befestigt, wobei zu diesem Zweck am Dach 2.5 eine nicht näher dargestellte Führung, beispielsweise eine Führungsschiene, ausgebildet ist und am oberen Planenabschnitt 3.1 mit der Führung korrespondierende Führungselemente, beispielsweise in die Führungsschiene eingreifende Führungsrollen, angeordnet sind. Somit ist die Plane 3 eine so genannte Gardinenplane, auch als Seitenvorhang bezeichnet.

An einem dem oberen Planenabschnitt 3.1 gegenüberliegenden unteren Planenabschnitt 3.2 ist die Plane 3 im dargestellten geschlossenen Zustand mittels mehrerer Planenverschlusselemente 5 gespannt an einem unter dem Boden 2.4 des Fahrzeugaufbaus 2 angeordneten äußeren Rahmenabschnitt 4.1 eines Rahmens 4 des Fahrzeugaufbaus 2 befestigt.

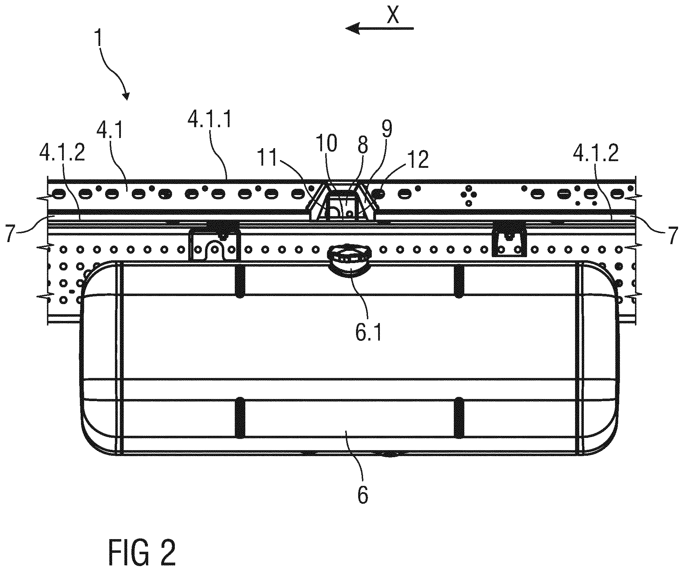

Der Rahmen 4 bildet dabei beispielsweise einen so genannten Hilfsrahmen, welcher an einem Fahrgestell des Nutzfahrzeugs 1 befestigt und zum Tragen des Fahrzeugaufbaus 2 ausgebildet ist. Der äußere Rahmenabschnitt 4.1 umfasst ein in den Figuren 2 bis 6 näher dargestelltes oberes Ende 4.1.1 und ein unteres Ende 4.1.2, wobei an dem unteren Ende 4.1.2 des Rahmenabschnitts 4.1 eine ebenfalls in den Figuren 2 bis 6 näher dargestellte Befestigungsstruktur 7 ausgebildet ist, welche zum Einhaken von Befestigungselementen der Planenverschlusselemente 5 eingerichtet sind. Insbesondere ist die Befestigungsstruktur 7 dabei derart ausgebildet, dass die hakenförmigen Befestigungselemente der Planenverschlusselemente 5 diese umgreifen können.

Die Planenverschlusselemente 5 sind dabei als so genannte Spannschnallen ausgebildet und umfassen in nicht näher dargestellter Weise jeweils ein beispielsweise als Riemen ausgebildetes erstes Halteelement, welches mit einem planenseitigen ersten Abschnitt an der Plane 3 befestigt ist. Weiterhin umfassen die Planenverschlusselemente 5 in nicht näher dargestellter Weise jeweils ein Spannelement, welches mit seinem oberen Ende mit einem dem ersten Abschnitt gegenüberliegenden zweiten Abschnitt des ersten Halteelements verbunden ist. Zusätzlich umfassen die Planenverschlusselemente 5 in nicht näher dargestellter Weise jeweils ein beispielsweise als Riemen ausgebildetes zweites Halteelement, welches mit dem Spannelement spannbar gekoppelt ist. An einem dem Spannelement abgewandten Abschnitt des zweiten Halteelements ist ein nicht näher dargestelltes hakenförmiges Befestigungselement befestigt, welches zu einer Befestigung an dem unteren Rahmenabschnitt 4.1 des Rahmens 4 eingerichtet ist.

Aufgrund einer vorteilhaften niedrigen Anordnung des unteren Rahmenabschnitts 4.1 sind ein Abstand und somit ein Freiraum zwischen dem Rahmenabschnitt 4.1 und einem Kraftstofftank 6 mit dessen Einfüllöffnung 6.1 klein ausgebildet.

Um dennoch in einfacher Weise eine Zugänglichkeit der Einfüllöffnung 6.1 für eine nicht näher dargestellte Einfülleinrichtung, beispielsweise eine so genannte Zapfpistole, zu ermöglichen, ist im Bereich der Einfüllöffnung 6.1 in Längsausdehnung zwischen einem vorderen Ende 4.1.3 und einem hinteren Ende 4.1.4 des Rahmenabschnitts 4.1 ein Ausschnitt 8 angeordnet. In diesem Ausschnitt 8 sind ein Teilbereich des unteren Endes 4.1.2, ein Teilbereich zwischen dem unteren Ende 4.1.2 und dem oberen Ende 4.1.1 und ein Teilbereich der Befestigungsstruktur 7 ausgeschnitten. Dabei ist der Ausschnitt 8 derart ausgebildet, dass dessen obere Begrenzung in einer größeren Höhe als die Einfüllöffnung 6.1 angeordnet ist, so dass die Einfüllöffnung 6.1 mit der entsprechenden Einfülleinrichtung zugänglich ist. Weiterhin ist der Ausschnitt 8 von einer in den Figuren 2, 3, 5 und 6 näher dargestellten Materialverstärkung 9 umgeben, welche eine erforderliche mechanische Stabilität des Rahmenabschnitts 4.1 im Bereich des Ausschnitts 8 sicherstellt.

Da im Bereich des Ausschnitts 8 auch die Befestigungsstruktur 7 unterbrochen ist, ist an dieser keine Befestigung eines hakenförmigen Befestigungselements eines Planenverschlusselements 5 möglich. Um dennoch eine Befestigung und ein Spannen der Plane 3 mittels eines Planenverschlusselements 5 im Bereich des Ausschnitts 8 zu ermöglichen, ist eine in zumindest zwei Positionen anordbare Befestigungsbrücke 10 vorgesehen, welche in einer dargestellten ersten Position den ausgeschnittenen Teilbereich des unteren Endes 4.1.2 des Rahmenabschnitts 4.1 überbrückt und zum Einhaken des zumindest einen Befestigungselements des Planenverschlusselements 5 eingerichtet ist. In einer zweiten Position gibt die Befestigungsbrücke 10 den Ausschnitt 8 zur Einführung der Einfülleinrichtung frei.

Um das Einführen der Einfülleinrichtung in den Ausschnitt 8 und die Bewegung der Befestigungsbrücke 10 zu ermöglichen, wird zunächst zumindest das an der Befestigungsbrücke 10 befestigte Planenverschlusselement 5 gelöst und dessen hakenförmiges Befestigungselement von der Befestigungsbrücke 10 demontiert.

Die Befestigungsbrücke 10 ist beispielsweise als Voll- oder Hohlzylinder ausgebildet, dessen Hochachse in der ersten Position zumindest im Wesentlichen in Längsrichtung X des Rahmenabschnitts 4.1 verläuft. Es ist jedoch alternativ auch jede andere Form der Befestigungsbrücke 10 möglich.

In einer möglichen Ausgestaltung ist die Befestigungsbrücke 10 in Längsrichtung X des Rahmenabschnitts 4.1 von der ersten Position in die zweite Position verschiebbar. Beispielsweise ist die Befestigungsbrücke 10 in der zweiten Position verliersicher am Rahmenabschnitt 4.1 gelagert.

In einer weiteren Ausgestaltung ist die Befestigungsbrücke 10 in der ersten Position an dem Rahmenabschnitt 4.1 zusätzlich mittels einer zerstörungsfrei lösbaren Verbindung, beispielsweise einer Verschraubung und/oder Verklipsung, kraft- und/oder formschlüssig befestigt und somit sicher in der ersten Position gehalten.

Eine mögliche Ausgestaltung sieht vor, dass die Befestigungsbrücke 10 in der ersten Position an dem Rahmenabschnitt 4.1 mittels einer zerstörungsfrei lösbaren Verbindung, beispielsweise einer Verschraubung und/oder Verklipsung, kraft- und/oder formschlüssig befestigt und vollständig vom Rahmenabschnitt 4.1 entfernt wird, wenn die Einfülleinrichtung eingeführt werden soll.

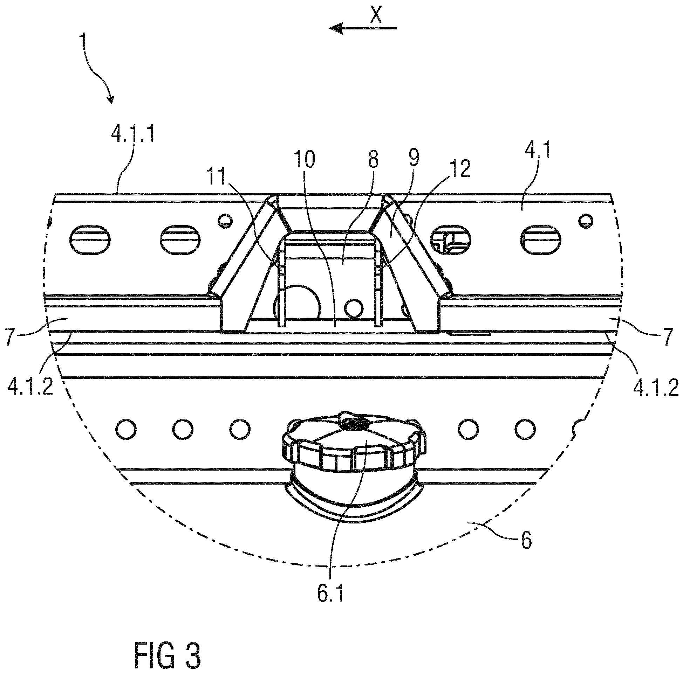

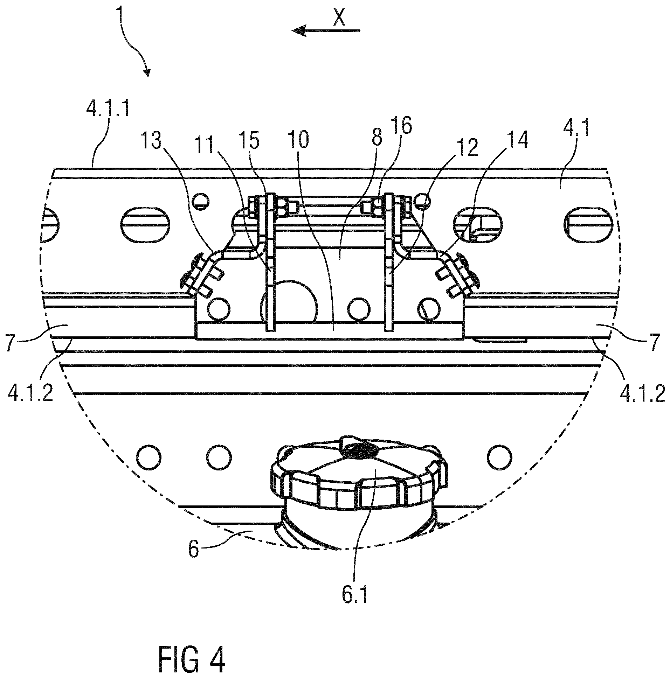

**Figur 2** zeigt einen vergrößerten Ausschnitt der Seitenansicht gemäß Figur 1 im Bereich des Kraftstofftanks 6. In **Figur 3** ist ein weiter vergrößerter Ausschnitt der Seitenansicht gemäß Figur 1 im Bereich der Einfüllöffnung 6.1 des Kraftstofftanks 6 dargestellt. **Figur 4** zeigt den Ausschnitt gemäß Figur 3 mit einer teiltransparenten Ansicht des Rahmenabschnitts 4.1, wobei zu einem besseren Verständnis die Materialverstärkung 9 nicht dargestellt ist.

In dem in den Figuren 2 bis 4 dargestellten Ausführungsbeispiel ist die Befestigungsbrücke 10 in der Art einer Schaukel ausgebildet, wobei die Befestigungsbrücke 10 an zwei Schwenkarmen 11, 12 befestigt ist.

Die Schwenkarme 11, 12 sind um eine in Längsrichtung X des Rahmenabschnitts 4.1 verlaufende Schwenkachse schwenkbar an jeweils einem Halteelement 13, 14 befestigt, beispielsweise mittels einer Verschraubung 15, 16.

Die Halteelemente 13, 14 sind an der Materialverstärkung 9 befestigt, beispielsweise ebenfalls verschraubt.

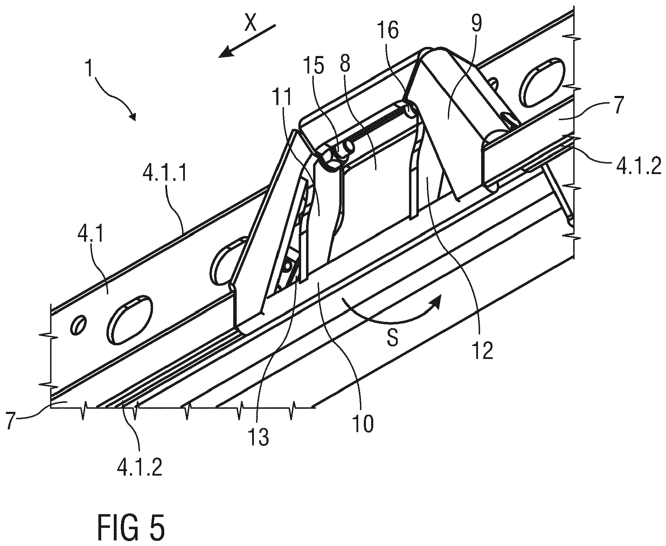

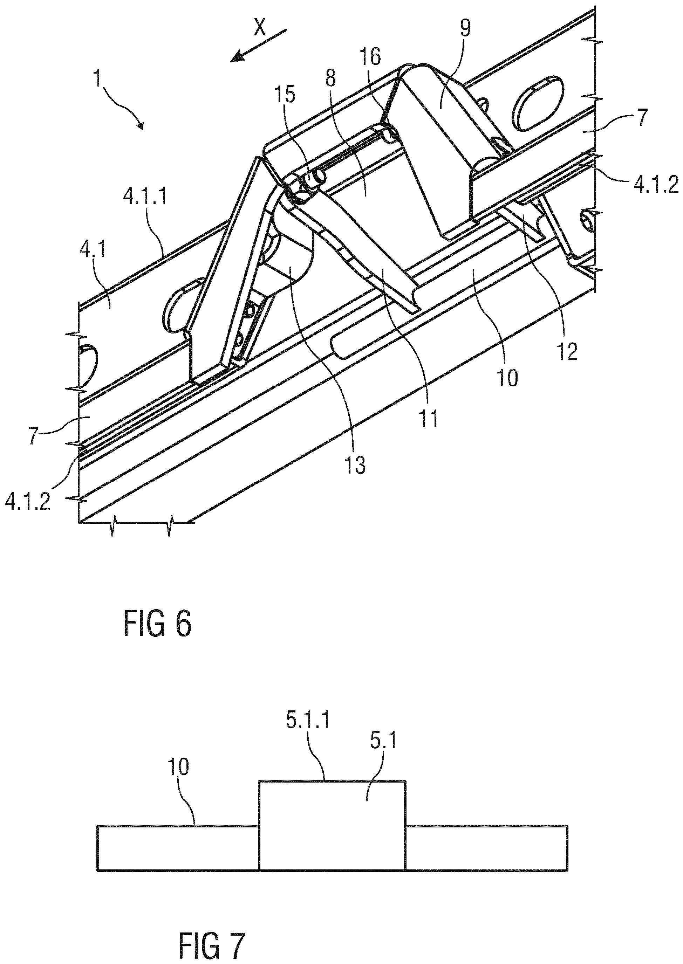

Dabei ist eine in den Figuren 5 und 6 näher dargestellte Schwenkbewegung S der Schwenkarme 11, 12 und somit der Befestigungsbrücke 10 zwischen der dargestellten ersten Position der Befestigungsbrücke 10 und der in Figur 6 gezeigten zweiten Position der Befestigungsbrücke 10 ausgehend von einer Außenseite des Rahmenabschnitts 4.1 in einen Freiraum hinter dem Rahmenabschnitt 4.1 freigegeben. In der ersten Position stützt sich die Befestigungsbrücke 10 an einer Innenseite des Rahmenabschnitts 4.1 ab.

In **Figur 5** ist eine perspektivische Ansicht des Ausschnitts des Rahmenabschnitts 4.1 gemäß Figur 4 dargestellt, wobei sich die Befestigungsbrücke 10 in der ersten Position befindet, in welcher diese den ausgeschnittenen Teilbereich des unteren Endes 4.1.2 des Rahmenabschnitts 4.1 überbrückt und zum Einhaken des zumindest einen Befestigungselements des Planenverschlusselements 5 eingerichtet ist. **Figur 6** zeigt eine perspektivische Ansicht des Ausschnitts des Rahmenabschnitts 4.1 gemäß Figur 4, wobei sich die Befestigungsbrücke 10 in der zweiten Position befindet, in welcher diese den Ausschnitt 8 freigibt.

Um das Einführen der Einfülleinrichtung durch den Ausschnitt 8 zu ermöglichen, kann ein Nutzer zuvor die Schwenkbewegung S ausführen und die Befestigungsbrücke 10 in die zweite Position überführen. Es ist auch möglich, dass die Befestigungsbrücke 10 beim Einführen der Einfülleinrichtung an diese anschlägt und mittels dieser während des Einführens in die zweite Position geschwenkt wird.

Um ein selbsttätiges Zurückschwenken der Befestigungsbrücke 10 aus der zweiten Position in die erste Position sicherzustellen, stehen bzw. steht in einer nicht näher dargestellten Ausgestaltung zumindest einer der Schwenkarme 11, 12 und/oder die Befestigungsbrücke 10 in mechanischem Eingriff mit zumindest einem Federelement, dessen Federkraft in Richtung der Innenseite des Rahmenabschnitts 4.1 wirkt.

Nach einem Zurückschwenken der Befestigungsbrücke 10 in die erste Position kann in umgekehrter Reihenfolge der obigen Beschreibung zu Figur 1 die Befestigung des Planenverschlusselements 5 an der Befestigungsbrücke 10 und somit das Spannen der Plane 3 erfolgen.

In **Figur 7** ist ein mögliches Ausführungsbeispiel eines Planenverschlusselements 5 für eine Plane 3 eines Fahrzeugaufbaus 2 dargestellt.

Der Fahrzeugaufbau 2 entspricht dabei dem in den Figuren 1 bis 6 beschrieben Fahrzeugaufbau 2 mit dem Unterschied, dass an dem Rahmenabschnitt 4.1 im Bereich des Ausschnitts 8 keine Befestigungsbrücke 10 angeordnet ist.

Um dennoch eine Befestigung eines Planenverschlusselements 5 im Bereich des Ausschnitts 8 am Rahmenabschnitt 4.1 zu ermöglichen, umfasst das Befestigungselement 5.1, welches mit einem Abschnitt 5.1.1 zu einer Befestigung an dem dem Spannelement abgewandten Abschnitt des zweiten Halteelements des Planenverschlusselements 5ausgebildet ist, eine Befestigungsbrücke 10.

Diese Befestigungsbrücke 10 ist eingerichtet, den in Längsausdehnung zwischen dem vorderen Ende 4.1.3 und einem hinteren Ende 4.1.4 des Rahmenabschnitts 4.1 angeordneten Ausschnitt 8, d. h. insbesondere den Teilbereich des unteren Endes 4.1.2 und somit die ausgeschnittene Befestigungsstruktur 7 in einem montierten Zustand zu überbrücken.

Zu einer Befestigung der Befestigungsbrücke 10 an den Ausschnitt 8 beidseitig begrenzenden Bereichen des unteren Endes 4.1.2 des Rahmenabschnitts 4.1 und/oder der Befestigungsstruktur 7 sind am unteren Ende 4.1.2 des Rahmenabschnitts 4.1 mit der Befestigungsbrücke 10 korrespondierende Aufnahmeelemente vorgesehen.

### BEZUGSZEICHENLISTE

- 1: Nutzfahrzeug
- 2: Fahrzeugaufbau
- 2.1: Stirnwand
- 2.2: Rückwand
- 2.3: Seitenwand
- 2.4: Boden
- 2.5: Dach
- 3: Plane
- 3.1: oberer Planenabschnitt
- 3.2: unterer Planenabschnitt
- 4: Rahmen
- 4.1: Rahmenabschnitt
- 4.1.1: oberes Ende
- 4.1.2: unteres Ende
- 4.1.3: vorderes Ende
- 4.1.4: hinteres Ende
- 5: Planenverschlusselement
- 5.1: Befestigungselement
- 5.1.1: Abschnitt
- 6: Kraftstofftank
- 6.1: Einfüllöffnung
- 7: Befestigungsstruktur
- 8: Ausschnitt
- 9: Materialverstärkung
- 10: Befestigungsbrücke
- 11: Schwenkarm
- 12: Schwenkarm
- 13: Halteelement
- 14: Halteelement
- 15: Verschraubung
- 16: Verschraubung

- S: Schwenkbewegung
- X: Längsrichtung

## Patentansprüche

1. Rahmen (4) für einen Fahrzeugaufbau (2) mit
- einem äußeren Rahmenabschnitt (4.1), umfassend ein oberes Ende (4.1.1) und ein unteres Ende (4.1.2),
- einer an dem unteren Ende (4.1.2) des Rahmenabschnitts (4.1) ausgebildeten Befestigungsstruktur (7), welche zum Einhaken zumindest eines Befestigungselements eines Planenverschlusselements (5) für eine Plane (3) des Fahrzeugaufbaus (2) eingerichtet ist,
- zumindest einem in Längsausdehnung zwischen einem vorderen Ende (4.1.3) und einem hinteren Ende (4.1.4) des Rahmenabschnitts (4.1) angeordneten Ausschnitt (8), in welchem ein Teilbereich des unteren Endes (4.1.2), ein Teilbereich zwischen dem unteren Ende (4.1.2) und dem oberen Ende (4.1.1) und ein Teilbereich der Befestigungsstruktur (7) ausgeschnitten sind, und
- einer in zumindest zwei Positionen anordbaren Befestigungsbrücke (10), welche in einer ersten Position den ausgeschnittenen Teilbereich des unteren Endes (4.1.2) des Rahmenabschnitts (4.1) überbrückt und zum Einhaken des zumindest einen Befestigungselements des Planenverschlusselements (5) eingerichtet ist und in einer zweiten Position den Ausschnitt (8) freigibt.

2. Rahmen (4) nach Anspruch 1, wobei
- die Befestigungsbrücke (10) mittels zumindest eines Schwenkarms (11, 12) an dem Rahmenabschnitt (4.1) befestigt ist und
- der Schwenkarm (11, 12) um eine in Längsrichtung (X) des Rahmenabschnitts (4.1) verlaufende Schwenkachse schwenkbar ist.

3. Rahmen (4) nach Anspruch 2, wobei eine Schwenkbewegung (S) des Schwenkarms (11, 12) ausgehend von einer Außenseite des Rahmenabschnitts (4.1) von der ersten Position der Befestigungsbrücke (10) in Richtung einer Innenseite des Rahmenabschnitts (4.1) freigegeben ist.

4. Rahmen (4) nach Anspruch 2 oder 3, wobei sich die Befestigungsbrücke (10) in der ersten Position zumindest an einer Innenseite des Rahmenabschnitts (4.1) abstützt.

5. Rahmen (4) nach einem der Ansprüche 2 bis 4, wobei der Schwenkarm (11, 12) und/oder die Befestigungsbrücke (10) in mechanischem Eingriff mit zumindest einem Federelement stehen bzw. steht, dessen Federkraft in Richtung einer Innenseite des Rahmenabschnitts (4.1) wirkt.

6. Rahmen (4) nach Anspruch 1, wobei die Befestigungsbrücke (10) von der ersten Position in Längsrichtung (X) des Rahmenabschnitts (4.1) in die zweite Position verschiebbar ist.

7. Rahmen (4) nach einem der vorhergehenden Ansprüche, wobei die Befestigungsbrücke (10) in der ersten Position an dem Rahmenabschnitt (4.1) mittels einer zerstörungsfrei lösbaren Verbindung kraft- und/oder formschlüssig befestigt ist.

8. Rahmen (4) nach einem der vorhergehenden Ansprüche, wobei in einem den Ausschnitt (8) umgebenden Bereich des Rahmenabschnitts (4.1) eine Materialverstärkung (9) angeordnet ist.

9. Planenverschlusselement (5) für eine Plane (3) eines Fahrzeugaufbaus (2)
- mit einem ersten Halteelement, welches an einem ersten Abschnitt zu einer Befestigung an der Plane (3) eingerichtet ist,
- mit einem Spannelement, welches mit dem Halteelement verbunden ist,
- mit einem zweiten Halteelement, welches mit dem Spannelement spannbar gekoppelt ist,
- mit einem Befestigungselement (5.1), welches an einem dem Spannelement abgewandten Abschnitt des zweiten Halteelements befestigt und zu einer Befestigung an einem Rahmenabschnitt (4.1) des Fahrzeugaufbaus (2) eingerichtet ist,
- wobei das Befestigungselement (5.1) eine Befestigungsbrücke (10) umfasst, welche eingerichtet ist, einen in Längsausdehnung zwischen einem vorderen Ende (4.1.3) und einem hinteren Ende (4.1.4) des Rahmenabschnitts (4.1) angeordneten Ausschnitt (8), in welchem ein Teilbereich des unteren Endes (4.1.2), ein Teilbereich zwischen dem unteren Ende (4.1.2) und dem oberen Ende (4.1.1) und ein Teilbereich der Befestigungsstruktur (7) ausgeschnitten sind, in einem montierten Zustand zu überbrücken.

10. Fahrzeugaufbau (2) für ein Nutzfahrzeug (1) mit
- zumindest einem Rahmen (4) nach einem der Ansprüche 1 bis 8 und
- zumindest einer Plane (3) mit zumindest einem Planenverschlusselement (5), welches ein zum Einhaken in die an dem unteren Ende (4.1.2) des Rahmenabschnitts (4.1) ausgebildete Befestigungsstruktur (7) und in die Befestigungsbrücke (10) eingerichtetes Befestigungselement umfasst.

11. Fahrzeugaufbau (2) für ein Nutzfahrzeug (1) mit
- zumindest einem Rahmen (4) mit einem äußeren Rahmenabschnitt (4.1), umfassend ein oberes Ende (4.1.1) und ein unteres Ende (4.1.2),
- einer an dem unteren Ende (4.1.2) des Rahmenabschnitts (4.1) ausgebildeten Befestigungsstruktur (7), welche zum Einhaken zumindest eines Befestigungselements (5.1) eines Planenverschlusselements (5) für eine Plane (3) eingerichtet ist,
- zumindest einem in Längsausdehnung zwischen einem vorderen Ende (4.1.3) und einem hinteren Ende (4.1.4) des Rahmenabschnitts (4.1) angeordneten Ausschnitt (8), in welchem ein Teilbereich des unteren Endes (4.1.2), ein Teilbereich zwischen dem unteren Ende (4.1.2) und dem oberen Ende (4.1.1) und ein Teilbereich der Befestigungsstruktur (7) ausgeschnitten sind, und
- zumindest einem Planenverschlusselement (5) nach Anspruch 9.

12. Fahrzeugaufbau (2) nach Anspruch 10 oder 11, umfassend
- eine Stirnwand (2.1),
- eine Rückwand (2.2),
- zwei Seitenwände (2.3),
- einen Boden (2.4) und
- ein sich zwischen der Stirnwand (2.1), der Rückwand (2.2) und den Seitenwänden (2.3) erstreckendes Dach (2.5).

13. Fahrzeugaufbau (4) nach Anspruch 12, wobei
- zumindest eine der Seitenwände (2.3) zumindest eine Plane (3) umfasst und
- die Plane (3) in einem zumindest teilweise geschlossenen Zustand mit einem oberen Planenabschnitt (3.1) an dem Dach (2.5) und einem dem oberen Planenabschnitt (3.1) gegenüberliegenden unteren Planenabschnitt (3.2) mittels des zumindest einen Planenverschlusselements (5) gespannt an einem Rahmenabschnitt (4.1) des Rahmens (4) befestigt ist.

14. Nutzfahrzeug (1),
- umfassend einen Rahmen (4) nach einem der Ansprüche 1 bis 8 und
- umfassend zumindest eine Einfüllöffnung (6.1) für einen Betriebsstoff,
- wobei der zumindest eine Ausschnitt (8) des Rahmenabschnitts (4.1) im Bereich der Einfüllöffnung (6.1) angeordnet ist und eine obere Begrenzung des Ausschnitts (8) in einer größeren Höhe als die Einfüllöffnung (6.1) angeordnet ist.

15. Nutzfahrzeug (1),
- umfassend einen Fahrzeugaufbau (2) nach einem der Ansprüche 10 bis 13 und
- umfassend zumindest eine Einfüllöffnung (6.1) für einen Betriebsstoff,
- wobei der zumindest eine Ausschnitt (8) des Rahmenabschnitts (4.1) im Bereich der Einfüllöffnung (6.1) angeordnet ist und eine obere Begrenzung des Ausschnitts (8) in einer größeren Höhe als die Einfüllöffnung (6.1) angeordnet ist.
